# EUROPEAN PATENT APPLICATION

(11) **EP 1 489 135 A1**
(43) Date of publication of application: **22.12.2004**
(21) Application number: 03076877.4
(22) Date of filing: 17.06.2003
(51) Int. Cl.: C08K 5/15, C08K 5/00, A23J 3/00

(54) **Use of secoiridoids, preferably oleuropein, for cross-linking biopolymers**

(71) Applicant: NIZO food research, 6718 ZB Ede (NL)
(72) Inventor: Driehuis, Frank, c/o NIZO food research, 6718 ZB Ede (NL); Floris, Theodorus A.G., 6718 ZB Ede (NL); De Kruif, Cornelis G., c/o NIZO food research, 6718 ZB Ede (NL)
(74) Representative: Huygens, Arthur Victor

(57) **Abstract**

The invention relates to the use of a secoiridoid-containing substance as a nontoxic cross-linking agent for the cross-linking of appropriate compounds including biopolymers, such as polypeptides and polysaccharides. Such biopolymers are particularly suitable in the production of food, feed, pharmaceutical and biomedical preparations, home and care products, and the like. Preferably, the cross-linking agent comprises an aglycone from a glycoside selected from the group of oleuropein, demethyloleuropein, verbascoside, ligustroside, and cornoside. Of these, oleuropein is preferred.

## Description

### Field of the invention

The present invention relates to a novel non-toxic cross-linking agent, its preparation and use, in particular in the cross-linking of biopolymers. Such biopolymers are particularly suitable in the production of food, feed, pharmaceutical and biomedical preparations, home and care products, and the like.

### Background of the invention

Cross-linking of biopolymers, such as proteins and polysaccharides, occurs in a variety of forms in nature and is also used in the manufacturing of products of various kinds, including foods, food ingredients, encapsulated substances, packaging materials, immobilized enzymes, immobilized micro-organisms, biomedical materials, tissue adhesives, and the like.

In cross-linking methods, usually bifunctional agents are applied to effect the cross-linking polymerization or immobilization, and the like. Cross-linking agents commonly used in such methods include aldehydes and dialdehydes, such as formaldehyde, glutardialdehyde, glyoxal, acetic acid anhydride, and enzymes, in particular transglutaminase (EC 2.3.3.13). Aldehydes are known to bind to nucleophilic side chains of proteins, i.e. the epsilon-amino group of lysine and the SH-group of cystein. Studies on the reaction of glutardialdehyde with proteins showed that this dialdehyde binds intensively to and cross-links protein molecules via covalent bonds between epsilon-amino groups of lysine residues (Peters & Richards, 1977, *Ann Rev Biochem* 46:523- 51).

However, the toxic nature of chemical cross-linking agents such as formaldehyde and glutardialdehyde limits their use in products that are intended to be applied for food and food ingredients, feed, pharmaceutical, biomedical and veterinary preparations, home and care products, and the like.

The enzyme transglutaminase is a well-known non-toxic alternative to chemical protein cross-linking agents. Transglutaminase catalyzes an acyl transfer reaction between the gamma-carboxamide group of a glutamine residue in a protein or peptide and a primary amine. The epsilon-amino group of lysine residues in a protein or peptide can serve as the primary amine in this reaction. In this way transglutaminase catalyzes the formation of glutamyl-lysine cross-links between protein molecules.

The use of transglutaminase in a variety of applications inter alia relating to the cross-linking food proteins and the manufacturing of various types of food is well-documented. For example, EP-A-0782883 discloses the preparation of edible microcapsules using transglutaminase as a cross-linking agent for hardening (solidifying) the capsule wall. EP-A-0610649 describes a method for the production of yoghurt in which raw materials comprising milk protein are pretreated with transglutaminase. EP-A-0671885 and US 5,866,180 disclose methods for the preparation of acidified milk products with enhanced physical stability using transglutaminase. Several documents, e.g. EP-A-0711504 and EP-A-1186238, WO 97/01961 and US 6,093,424 report on the use of transglutaminase in the production of cheese to increase the proportion of milk whey protein in the cheese material.

As another alternative to chemical cross-linking certain iridoids which are obtained from the fruits of *Gardenia jasminoides* have been reported to possess cross-linking properties. For example, US 4,983,524 discloses a method of immobilizing enzymes e.g. on a chitosan support using an iridoid aglycone cross-linking agent such as genipin (the aglycone form of geniposide). US 5,037,664 describes the use of genipin for producing a gel-like food by cross-linking food proteins or other food ingredients containing primary amino groups, such as chitosan.

There is a strong demand to investigate further non-toxic food-derived alternatives to chemical protein cross-linking agents, preferably of vegetable origin, as a potentially inexpensive and easily accessible source of raw materials. Suitable candidates would preferably have properties, e.g. in terms of binding capacity, processability, and the like, which are of the same order or better than cross-linking agents which are currently used, in particular in food and health care industries.

Oleuropein is a bitter glucoside which is found especially in the leaves of the olive tree, *Olea europea,* but also in other parts of this tree including the roots, bark, and fruit. Medicinal use of olive leaf extracts dates back to the early 1800s when they were used in liquid form as a treatment for malarial infections. A number of scientific studies have shown oleuropein to have certain anti-viral, anti-fungal, anti-bacterial, anti-oxidant, and antiinflammatory properties. See, for documentation, C. Soler-Rivas et al., *J*. *Sci Food Agric* 80:1013-1023 (2000), and US 6,197,308. Furthermore, US 6,440,465 discloses the use of oleuropein as an ingredient in a topical composition for the treatment of psoriasis. Finally, Konno et al., *Proc.Natl. Acad. Sci. USA* 96:9159-9164 (1999), and *16th Annual Meeting of Int. Soc Chem Ecology,* Nov 13-17, 1999, disclose the enzymatic activation of oleuropein in damaged leaves of the privet tree, *Ligustrum obtusifolium,* by foliar β-glucosidase and polyphenol oxidase as a plant defense to show strong protein-denaturing activity that resembles that of glutardialdehyde, and makes protein innutritive for herbivores by decreasing the lysine content. No suggestion was made that oleuropein and related compounds could be developed to potentially useful cross-linking agents in a variety of processes which is an object of the present invention.

### Summary of the invention

We have now surprisingly found that secoiridoid-containing substances in activated form, in particular deglycosylated oleuropein, exhibit interesting cross-linking properties which make them suitable as cross-linking agents in a variety of applications in the chemical and biotech field, in particular in or relating to food and food ingredients, feed, pharmaceutical and biomedical preparations, home and care products, and the like. The present invention is based on these findings.

Therefore, in accordance with an aspect of the present invention a method is provided for cross-linking a biopolymer which comprises the steps of: (a) contacting said biopolymer with a secoiridoid-containing cross-linking agent to cross-link said biopolymer; and, optionally, (b) collecting the cross-linked biopolymer product resulting from step (a).

According to another aspect of the present invention the use of a secoiridoid-containing substance is provided as a cross-linking agent for the cross-linking of biopolymers, such as polypeptides and polysaccharides. The presently preferred secoiridoid is oleuropein. Preferably, the secoiridoids are used in active or activated form. In a preferred embodiment, the secoriridoid-containing substance is deglycosylated preferably by pretreating it with a suitable enzyme, in particular a β-1,6-glucosidase.

These and other aspects of the present invention will be discussed in more detail below.

### Brief description of the drawings

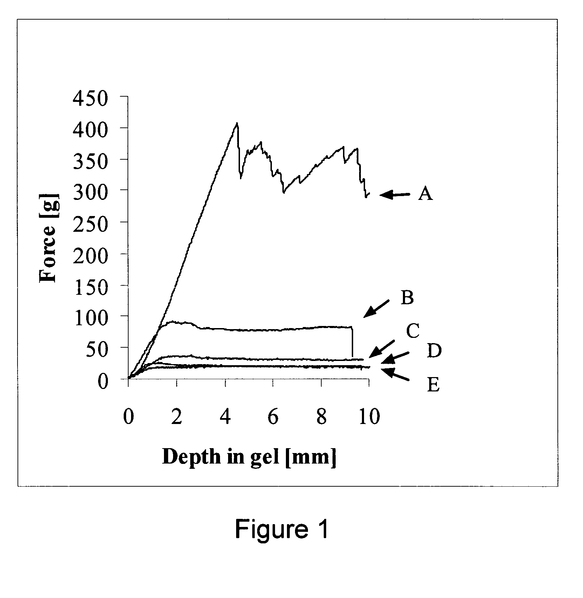

Figure 1 shows the force-distance curves obtained with GDL-induced WPI gels with 27 g/l freeze dried activated olive leaf extract (A), 13.5 g/l freeze dried activated olive leaf extract (B), without additive (C), 27 g/l freeze dried inactivated olive leaf extract (D) and 5mM glutardialdehyde (E).

### Detailed description of the invention

Secoiridoids are a very specific group of coumarin-like compounds which are abundant in Oleaceas, Gentianales, Cornales and many other plants. They are usually glycosidically bound and produced from the secondary metabolism of terpenes as precursors of various indole alkaloids. The secoiridoids in Oleaceae are usually derived from the oleoside type of glucosides (oleosides), which are characterised by an exocyclic 8,9-olefinic functionality, a combination of elenolic acid and a glucosidic residue. Oleuropein is an ester of 2'-(3',4'-dihydroxyphenyl)ethanol (hydroxytyrosol) and the oleosidic skeleton common to the secoiridoid glucosides of Oleaceae. For a review on secoiridoids, see C. Soler-Rivas et al., *J*. *Sci Food Agric* 80:1013-1023 (2000).

The invention will now be described in more detail using oleuropein as a typical example of a useful secoiridoid cross-linking agent.

Oleuropein is present in high amounts (60-90 mg/g dry weight) in the leaves of the olive tree (B. le Tutour and D. Guedon, *Phytochemistry* 31:1173-1178 (1992)), but it has been found throughout the tree, including all constituent parts of the fruit (peel, pulp and seed). See M. Servili et al., *J Agric Food Chem* 47:12-18 (1999). Methods of preparing extracts from olive leaves or olive fruits as a source for oleuropein and other secoiridoids are known in the art; see, e.g., WO 99/38383, WO 00/04794, US 5,714,150, US 6,197,308 and JP 2002128678.

Alternatively, the oleuropein employable in the process of the present invention is also commercially available, and can be purchased e.g. from Extrasynthese (France), in the form of its glucoside.

The oleuropein which is used in the cross-linking reactions according to the invention can be employed in any form, ranging from a crude extract, e.g. from olive leaves or fruits, to a highly purified form, as long as it is able to exert its cross-linking activity.

It was found that the cross-linking activity can be initiated, improved or optimized when the oleuropein is subjected to a deglycosylation treatment prior to or during the cross-linking reaction to remove the glucose group from the secoiridoid glycoside moiety of the molecule. The removal can be accomplished in several ways which are known in the art, e.g. chemically or enzymatically or by fermentation with microorganisms expressing β-glucosidase activity. The enzymatic removal is the preferred route, and a suitable and preferred enzyme is β-1,6-glucosidase which is widely commercially available. The conversion of oleuropein-glucoside to its aglycone with β-1,6-glucosidase is suitably carried out in an aqueous buffer solution at neutral or acidic pH for several hours at room temperature. A suitable pH usually is in the range of 3 to 9, preferably between 4 to 7, and most preferably between 4.5 and 6.5. A skilled person can easily optimize the reaction conditions, if desired, without using inventive skill or exerting undue experimentation.

Alternatively, the activation of oleuropein can be accomplished *in situ* by adding both oleuropein and the deglycosylating enzyme, such as β-1,6-glucosidase, to the substrate to be cross-linked in a suitable medium as described above.

The cross-linking reaction in accordance with the method of the present invention can be conducted by any method involving cross-linkage formation which has been conventionally employed to prepare cross-linked products provided that the cross-linking agent is oleuropein in an active or activated form as described above. For example, a cross-linked protein or polysaccharide can be produced according to this invention by the cross-linking polymerization method. Thus, the starting substrate, for example β-lactoglobulin, casein, ovalbumin, yoghurt, whey protein, gum arabic, and the like, is dissolved or dispersed in a suitable solvent, preferably water, which may or may not be buffered, and contacted with a solution containing activated oleuropein to facilitate the cross-linking polymerization of the substrate.

In order to produce the cross-linked products of the invention, the oleuropein-mediated cross-linking reaction preferably takes place in an aqueous solution while standing still or being stirred for a period of 2 to 70 hours at a pH ranging from about 2 to about 10, preferably from about 4 to about 8 and at a temperature of 5° to 70°C, more preferably at an ambient temperature. The amount of oleuropein used for the cross-linkage formation is in the range of about 0.001 to about 1, preferably 0.005 to 0.5 parts per 1 part of the substrate on the basis of the dry material. As illustrated in the Examples below the crosslinking of various protein solutions containing about 0.5-3% (5-30 mg/ml) of protein using about 5 mM crosslinking agent, corresponding to about 2.7 mg/ml oleuropein or 1.8 mg/ml deglycosylated oleuropein, i.e. up to 0.5 parts of oleuropein per 1 part of substrate, gave satisfactory yields. A skilled person will be able to optimize the amounts and reaction conditions without inventive skill to optimize the results.

The types of secoiridoids which can be employed in accordance with the present invention are not specifically restricted as long as they are capable of promoting the cross-linking reaction. Preferably, however, they are selected from non-toxic aglycones of glucosides such as oleuropein, demethyloleuropein, verbascoside, ligustroside, cornoside, salidroside and nüzhenide. Of these, oleuropein is most preferred.

The secoiridoids which can be employed in accordance with the present invention exhibit interesting cross-linking properties which make them suitable as cross-linking agents in a variety of applications in the chemical and biotech field, in particular in or relating to food and food ingredients, feed, pharmaceutical and biomedical preparations, home and care products, and the like, but also to non-food applications.

These applications include, for example:
- Stabilisation of oil and protein emulsions;
- Increasing viscosity of protein solutions;
- Stabilisation of chitosan or chitosan/protein capsules, e.g. prepared by complex coacervation or other encapsulation methods;
- Preparation of food adhesive, and preparation of restructured food products using such food adhesive, for example meat, fish, and cheese products;
- Preparation of protein or chitosan or protein/chitosan film or casing;
- Use of a culture expressing β-glucosidase activity as a means of inducing crosslinking, and use of such culture in preparation of fermented food products, such as yoghurt, cheese, bread, and the like;
- Treatment of protein-containing animal feeds, in particular ruminant feed, with the aim to reduce the rate of protein hydrolysis in the intestinal tract in order to increase the nutritional value of the feed;
- Treatment of protein-containing animal feeds that are preserved by ensilation, with the aim to reduce protein hydrolysis during the ensilation process in order to increase the nutritional value of the ensiled feed;
- controlled release pharmaceuticals & nutritional supplements;
- biomedical products, e.g. implant material, wound healing/tissue glue, blood substitutes;
- biotechnological products: immobilisation and attachment to carrier of proteins/enzymes

The food-related products obtained by the oleuropein-mediated crosslinking according to the present invention are believed to take advantage of the beneficial properties which are attributed to oleuropein, especially in the field of health-promoting properties. Such properties are associated with the positive influence of olive oil phenols and extracts on LDL oxidation, which inter alia may play a role in the cholesterol metabolism (Leenen et al, *J*. *Agric Food Chem* 50:1290-7 (2002)).

The invention is further illustrated by the following examples which are given by way of illustration only and should not be construed as limiting the invention in any respect.

### Example 1

### Hydrolysis of oleuropein-glucoside by β-glucosidase and use of the reaction product as a cross-linking agent for proteins

To a solution of 5.9 mg/ml (11 mM) of oleuropein-glucoside (Extrasynthese, France) in 100 mM sodium phosphate buffer pH 7.0 β-glucosidase (from almonds; Fluka, Zwijndrecht, The Netherlands) was added to a final concentration of 0.64 mg/ml. The mixture was incubated for 4 h at 25°C. Conversion of oleuropein-glucoside to the oleuropein aglycon derivative was determined by HPLC, using a reverse phase column (Hi-Pore RP-318, 4.6 x 250 mm; Bio-Rad Laboratories, The Netherlands) and an absorbance detector operating at 230 nm. The mobile phase consisted of 10-65% acetonitril plus 1% trifluoroacetic acid in water and was eluted at a flow rate of 0.8 ml/min at 30°C. More than 90% of the oleuropein-glucoside was converted after 4 h of incubation. The incubated solution of oleuropein-glucoside and β-glucosidase is referred to as activated oleuropein.

The protein cross-linking activity of the activated oleuropein was tested with β-lactoglobulin, casein, β-casein, and ovalbumin. Solutions of these proteins (10 mg/ml) were prepared in 100 mM sodium phosphate buffer pH 7.0 and mixed with an equal volume of activated oleuropein. The mixtures were incubated for 30 min at 25°C. Cross-linking of proteins was evaluated by polyacrylamide gel electrophoresis in the presence of sodium dodecyl sulphate (SDS-PAGE). After electrophoresis the separated proteins were stained with Coomassie blue. Uncross-linked proteins showed discrete bands after electrophoresis according to their molecular weight. No discrete bands were visible after incubation of the proteins with activated oleuropein. Instead, some stained material was visible in the sample wells as well as a diffuse smear in the utmost upper part of the gel. Identical results were obtained with protein solutions when mixed with glutardialdehyde (Sigma) to a final concentration of 0.5 mg/ml (5 mM).

These results indicate that activated oleuropein is capable of creating covalent linkages between protein molecules.

In addition, the protein cross-linking activity of activated oleuropein and genipin at pH 7.0 were compared, using β-lactoglobulin as a target protein. Treatment with genipin (5.5 mM final concentration) yielded a gel electrophoresis pattern with a discrete band at the position of β-lactoglobulin. As compared with untreated β-lactoglobuline this band had a slightly reduced intensity. These observations indicate that protein cross-linking activity of activated oleuropein is similar to that of glutardialdehyde and higher than that of genipin.

The protein cross-linking activities of activated oleuropein, glutardialdehyde and genipin were also tested under acidic conditions (pH 4.5), using β-lactoglobuline as the target protein. At this pH, glutardialdehyde and genipin did not result in detectable cross-linking, whereas activated oleuropein did. The protein cross-linking activity of activated oleuropein at pH 4.5 was less than at pH 7.0.

### Example 2

### Cross-linking of proteins by in situ incubation with oleuropein-glucoside and β-glucosidase

Solutions of β-lactoglobulin, casein, β-casein or ovalbumin (10 mg/ml) were prepared in 100 mM sodium phosphate buffer pH 7.0. These solutions were mixed with an equal volume of a solution containing 5.9 mg/ml (11 mM) of oleuropein-glucoside. β-Glucosidase (from almonds; Fluka, Zwijndrecht, The Netherlands) was added to the mixtures to a final concentration of 0.64 mg/ml. After 4 h of incubation at 25°C the samples were analyzed by protein gel electrophoresis as described in Example 1. No discrete protein bands were visible. The observed patterns on the gel were identical with those of protein solutions treated with activated oleuropein prepared according to the procedure described in Example 1.

These results indicate that addition of β-glucosidase activity to mixtures of proteins and oleuropein-glucoside creates covalent linkages between protein molecules.

### Example 3

### Preparation of a cross-linking agent from olive leaf extract and its use in cross-linking proteins

Olive leaf extract powder containing approximately 20% on dry weight basis of oleuropein (Monteloeder, Spain) was suspended in water to a final concentration of 100 g/l. Undissolved matter was removed by centrifugation for 20 min at 4000 x g. The supernatant was adjusted to pH 7.0. β-Glucosidase was added to the supernatant fraction to a final concentration of 2.5 mg/ml. The mixture was incubated for 4 h at 25°C. The incubated solution of the soluble fraction of olive leaf extract and β-glucosidase is referred to as activated olive leaf extract.

Deglycosylation of oleuropein-glucoside in activated olive leaf extract was confirmed by the reverse phase HPLC method described in Example 1. The protein cross-linking activity of activated olive leaf extract was evaluated with β-lactoglobulin using gel electrophoresis as described in Example 1. No discrete protein bands were visible. The observed patterns on the gel were identical with that of β-lactoglobulin treated with glutardialdehyde or activated oleuropein prepared according the procedure described in Example 1.

The results of this experiment indicate that oleuropein-based protein cross-linking activity can be derived from olive leaf extract by a simple procedure.

### Example 4

### Preparation of a cross-linking agent from olive leaf extract using enzymes other than β-glucosidase and its use in cross-linking proteins.

In the experiment described in this example it was investigated whether enzyme preparations other than β-glucosidase from almonds are capable to convert oleuropein-glucoside to the oleuropein aglycon derivative. It was also investigated whether protein cross-linking activity from olive leaf extract can be prepared with these enzyme preparations.

The following enzyme preparations were examined: β-glucosidase from almonds (Fluka, The Netherlands); β-glucosidase from Aspergillus niger (Fluka); Novozym® 188 (Novozymes, Denmark), described as a β-glucosidase enzyme preparation by the manufacturer; Pectinex® Ultra SP-L (Novozymes, Denmark) and Rohament® CL (AB Enzymes, Germany), described as cellulase enzyme preparations by the manufacturers; and an acid lactase from Aspergillus oryzae (Sigma, the Netherlands).

Olive leaf extract powder containing approximately 20% (on dry weight basis) of oleuropein was suspended in water to a final concentration of 100 g/l. Undissolved matter was removed by centrifugation for 20 min at 4000 x g. The supernatant was adjusted to pH 4.5 or 6.5. Maxilact® was tested at pH 6.5, the other enzymes at pH 4.5. Enzyme preparations were added to following final concentrations: β-glucosidase from almonds, 2.5 mg/ml; β-glucosidase from Aspergillus niger, 2.5 mg/ml; Novozym 188, 0.1 ml/ml; 25 mg/ml; Pectinex Ultra SP-L, 0.1 ml/ml; Rohament CL, 0.1 ml/ml; Maxilact, 0.1 ml/ml; acid lactase from Aspergillus oryzae, 20 mg/ml.

The protein cross-linking activity of the enzyme-treated olive leaf extracts was evaluated with β-lactoglobulin, using gel electrophoresis as described in Example 1. The sample with olive leaf extract treated with β-glucosidase from almonds showed no β-lactoglobulin band, nor any other protein band, confirming the results described in Example 3. The same result was observed for the sample with olive leaf extract treated with acid lactase from Aspergillus oryzae. The samples with olive leaf extract treated with β-glucosidase from Aspergillus niger, Novozym 188 or Rohament CL showed several diffuse bands at positions between the position of β-lactoglobulin and the top of the gel. The sample with olive leaf extract treated with Maxilact or Pectinex Ultra SP-L showed a band at the position and with the same intensity as a sample with β-lactoglobulin without olive leaf extract.

Olive leaf extract treated with Novozym 188, Rohament CL, Maxilact or acid lactase from Aspergillus oryzae were also analyzed for oleuropein-glucoside using the HPLC method described in Example 1. The results showed that oleuropein-glucoside was deglycosylated for at least 80% by the treatment with Novozym 188, Rohament CL or acid lactase from Aspergillus oryzae. No significant deglycosylation of oleuropein-glucoside was observed in the sample treated with Maxilact.

The results of this experiment indicate that the enzyme source required for preparation of oleuropein-based protein cross-linking activity from olive leaf extract is not restricted to β-glucosidase preparations.

### Example 5

### Stabilisation of whey protein gels by cross-linking with activated olive leaf extract

Gelation of whey proteins was conducted according a two-step procedure described by Alting, A.C., Hamer, R.J., De Kruif, C.G. and Visschers, R.W. (2000), Journal of Agricultural and Food Chemistry 48, 5001-5007. In short, protein aggregates were prepared by heat treatment of a solution of whey protein isolate (WPI; 30 g/l; Bipro, Davisco International Inc., Le Sueur, MN, USA) in demineralized water. A freeze dried preparation of activated olive leaf extract, prepared as described in Example 3, was added to final concentrations of 13.5 and 27.0 g/l, equivalent to oleuropein concentrations of 5 and 10 mM, respectively. Glucono-delta-lacton (GDL; Sigma Chemical Co., St. Louis, MO, USA) was added to a final concentration of 1.7 g/l, to decrease pH to around the isoelectric point of whey proteins and to induce gelation. In addition, samples were prepared with unactivated olive leaf extract (27.0 g/l; equivalent to a oleuropein-glucoside concentration of 10 mM), glutardialdehyde (5 mM) and without additive. Samples (100 ml) were placed in 45 x 60 mm vials and incubated for 20 h at 22°C. During incubation the pH of the samples decreased gradually from 6.5-6.7 to 4.8-5.1. Gel firmness was determined at 22°C using a texture analyzer (model TA XT-2; Stable Micro Systems, UK). The gels formed in the vials were penetrated with a cylinder probe, travelling with a rate of 18 mm/min to a 10-mm depth into the gels. The force required to penetrate the gels was measured. The results of these measurements are shown in Figure 1. Presence of activated olive leaf extract strongly increased gel hardness, whereas presence of unactivated olive leaf extract or glutardialdehyde did not.

### Example 6

### Increase of viscosity of yoghurt by cross-linking with activated olive leaf extract

Activated olive leaf extract was prepared with β-glucosidase from almonds and acid lactase from Aspergillus oryzae as described in Example 3 and 4 and subsequently freeze dried. Freeze dried material was added to commercial non-fat natural stirred yoghurt to final concentrations of 2.5, 5.0 and 10.0 g/l. The mixtures were incubated for 20 h at 4°C. The viscosity of the samples was visually inspected. Thickness and homogeneity were visually inspected by pouring 30 ml of yoghurt on a black plate mounted in a position of 30 °. The results of this experiment showed that addition of activated olive leaf extract prepared with both enzymes had no effect on the homogeneity and a positive effect on the thickness of the yoghurt samples.

### Example 7

### Stabilisation of whey protein/gum arabic capsules prepared by complex coacervation by cross-linking with activated treated olive leaf extract

Capsules of WPI and gum arabic were prepared according to the complex coacervation procedure as described in EP 02077443.6 of Nizo food research (filed 14 June 2002). In short, capsules containing 5% (w/w) orange oil were prepared by emulsifying 3.75 g of orange oil in 50 g of a 1% (w/w) solution of WPI (Bipro, Davisco International Inc., Le Sueur, MN, USA) at pH 7.0. Subsequently, 25 g of a 1% (w/w) solution of gum Arabic was added and the pH was adjusted to 4.0 with a solution of hydrogen chloride. The emulsion was incubated overnight at 22°C, while stirring. A coacervate layer was formed around the oil droplets during the incubation period. Capsules prepared in this way remain stable at pH values in the range of 2.5 to 4.5, but disintegrate at pH values outside this range. Protein cross-linking agents may be added to prevent disintegration. In this example, activated olive leaf extract was evaluated as an alternative for glutardialdehyde.

Two hundred fifty mg of freeze dried activated olive leaf extract, prepared as described in Example 3, was dissolved in 1 ml of water and pH was adjusted to 4.0. This solution was added to 5 ml of the capsulate suspension prepared as described previously. The final concentration of freeze dried activated olive leaf extract in the capsulate suspension was 42 mg/ml. To another 5-ml sample of the capsulate suspension 0.7 ml of a 25% glutardialdehyde was added. After treatment with activated olive leaf extract or glutardialdehyde, the pH of the capsulate suspension was raised to pH 7.6

The intactness of capsules was inspected by phase contrast microscopy. This showed no significant difference between capsules treated with glutardialdehyde and capsules treated with activated olive leaf extract. The results of this experiment indicate that cross-linking with activated olive leaf extract prevented disintegration of the capsules at high pH with a similar effectiveness as glutardialdehyde.

## Claims

1. A method for cross-linking a biopolymer which comprises the steps of: (a) contacting said biopolymer with a secoiridoid-containing cross-linking agent to cross-link said biopolymer; and, optionally, (b) collecting the cross-linked biopolymer product resulting from step (a).

2. The method according to claim 1 wherein the secoiridoid-containing cross-linking agent comprises an aglycone from a glycoside selected from the group of oleuropein, demethyloleuropein, verbascoside, ligustroside, and cornoside.

3. The method according to claim 1 or 2 wherein the secoiridoid-containing cross-linking agent is activated by treatment with a deglycosylating agent during or prior to the cross-linking reaction.

4. The method according to claim 3 wherein the deglycosylating agent is an enzyme.

5. The method according to claim 4 wherein the enzyme is a β-1,6-glucosidase.

6. The method according to claim 3 wherein the deglycosylating agent is a microorganism expressing β-1 ,6-glucosidase activity.

7. Use of a secoiridoid derivative as a cross-linking agent for the cross-linking of biopolymers, such as polypeptides and polysaccharides.

8. Use of a secoiridoid derivative according to claim 7 wherein the secoiridoid derivative is activated by deglycosylation.

9. Use of a secoiridoid derivative according to claim 7 or claim 8 wherein the secoiridoid derivative is oleuropein.
